# EUROPÄISCHE PATENTSCHRIFT

(11) **EP 4 237 279 B1**
(45) Veröffentlichungstag und Bekanntmachung des Hinweises auf die Patenterteilung: **17.04.2024**
(21) Anmeldenummer: 21805648.9
(22) Anmeldetag: 28.10.2021
(51) Int. Cl.: B60N 2/90, B60N 2/12, B60N 2/02

(54) **FAHRZEUGSITZ**
VEHICLE SEAT
SIÈGE DE VÉHICULE

(30) Priorität: 02.11.2020 DE 102020128812; 17.11.2020 DE 102020130355
(43) Veröffentlichungstag der Anmeldung: 06.09.2023
(73) Patentinhaber: Adient US LLC, Plymouth MI 48170 (US)
(72) Erfinder: KAEMMERER, Joachim, 67663 Kaiserslautern (DE); WOLF, Christian, 67811 Dielkirchen (DE)
(74) Vertreter: Liedhegener, Ralf
(86) Internationale Anmeldenummer: PCT/IB2021/059965
(87) Internationale Veröffentlichungsnummer: WO 2022/090985

(56) Entgegenhaltungen:
- US-A1- 2019 152 352

## Beschreibung

Die Erfindung betrifft einen Fahrzeugsitz, insbesondere Kraftfahrzeugsitz, mit einem Sitzteil, einer Lehne, einer Kinematik zur Überführung des Fahrzeugsitzes von einer zur Personenbeförderung geeigneten Gebrauchsstellung in eine Nichtgebrauchsstellung und zurück, und einer Verriegelungsvorrichtung, insbesondere einem Schloss, zur Verriegelung der Kinematik in der Gebrauchsstellung, wobei der Fahrzeugsitz bei entriegelter Verriegelungsvorrichtung aus der Gebrauchsstellung in die Einstiegsstellung überführbar ist, wobei die Kinematik zur Überführung des Fahrzeugsitzes aus der Gebrauchsstellung in die Nichtgebrauchsstellung mittels einer Kopplungsvorrichtung an eine Antriebsvorrichtung koppelbar ist.

### Stand der Technik

Aus der DE 10 2019 133 959 A1 ist ein Fahrzeugsitz bekannt, mit einem Sitzteil, einer Lehne, und einer Kinematik zur Überführung des Fahrzeugsitzes von einer zur Personenbeförderung geeigneten Gebrauchsstellung in eine Einstiegsstellung, insbesondere eine den Einstieg in eine hintere Sitzreihe erleichternde Einstiegsstellung, wobei der Fahrzeugsitz mittels einer Antriebsvorrichtung von der Gebrauchsstellung in die Einstiegsstellung und umgekehrt überführbar ist, wobei die Kinematik und die Antriebsvorrichtung zur angetriebenen Überführung des Fahrzeugsitzes mittels einer Kopplungsvorrichtung miteinander koppelbar sind, wobei die Kinematik, zu einer manuellen Überführung des Fahrzeugsitzes in die Einstiegsstellung, durch eine Betätigung der Kopplungsvorrichtung von der Antriebsvorrichtung entkoppelbar ist. Die Kopplungsvorrichtung weist ein um eine Drehachse schwenkbar gelagertes Kopplungsmittel auf. Das Kopplungsmittel weist eine mit dem Bolzen wirkverbindbare Klinke und einen mit dem Kopplungsmittel zusammenwirkenden Entriegelungshebel auf. Bewirkt eine Betätigung des Entriegelungshebels eine Entriegelung des Kopplungsmittels, wird die Klinke geöffnet, so dass der Bolzen aus dem Kopplungsmittel austreten kann.

Die US2019/152352 zeigt einen Fahrzeugsitz der von einer Gebrauchsstellung in eine Nichtgebrauchtsstellung überführt werden kann und der eine Verriegelungsvorrichtung aufweist zum Verriegeln des Sitzes in der Gebrauchsstellung.

### Aufgabe

Der Erfindung liegt die Aufgabe zu Grunde, einen Fahrzeugsitz eingangs genannter Art zu verbessern, insbesondere einen Fahrzeugsitz bereitzustellen, bei dem ein Öffnen wenigstens eines eine Kinematik verriegelnden Schlosses durch die Antriebsvorrichtung erfolgen kann.

### Lösung

Diese Aufgabe wird erfindungsgemäß gelöst durch einen Fahrzeugsitz, insbesondere Kraftfahrzeugsitz, mit einem Sitzteil, einer Lehne, einer Kinematik zur Überführung des Fahrzeugsitzes von einer zur Personenbeförderung geeigneten Gebrauchsstellung in eine Nichtgebrauchsstellung und zurück, und einer Verriegelungsvorrichtung, insbesondere einem Schloss, zur Verriegelung der Kinematik in der Gebrauchsstellung, wobei der Fahrzeugsitz bei entriegelter Verriegelungsvorrichtung aus der Gebrauchsstellung in die Einstiegsstellung überführbar ist, wobei die Kinematik zur Überführung des Fahrzeugsitzes aus der Gebrauchsstellung in die Nichtgebrauchsstellung mittels einer Kopplungsvorrichtung an eine Antriebsvorrichtung koppelbar ist. Die Kopplungsvorrichtung weist eine Entriegelungsschwinge zur wenigstens mittelbaren Entriegelung der Verriegelungsvorrichtung auf, wobei in der Gebrauchsstellung des Fahrzeugsitzes eine Aktivierung der Antriebsvorrichtung zunächst eine Schwenkbewegung der Entriegelungsschwinge bewirkt, so dass eine Entriegelung der Verriegelungsvorrichtung erfolgt. Erst nach der Schwenkbewegung der Entriegelungsschwinge ist die Kinematik von der Antriebsvorrichtung zur Überführung des Fahrzeugsitzes in die Nichtgebrauchsstellung antreibbar.

Dadurch, dass die Kopplungsvorrichtung eine Entriegelungsschwinge zur wenigstens mittelbaren Entriegelung der Verriegelungsvorrichtung aufweist, wobei in der Gebrauchsstellung des Fahrzeugsitzes eine Aktivierung der Antriebsvorrichtung zunächst eine Schwenkbewegung der Entriegelungsschwinge bewirkt, so dass eine Entriegelung der Verriegelungsvorrichtung erfolgt, und erst nach der Schwenkbewegung der Entriegelungsschwinge die Kinematik von der Antriebsvorrichtung zur Überführung des Fahrzeugsitzes in die Nichtgebrauchsstellung antreibbar ist, wird kein zusätzlicher Aktuator zur Entriegelung der Verriegelungsvorrichtung benötigt.

Die Nichtgebrauchsstellung ist insbesondere eine den Einstieg in eine hintere Sitzreihe erleichternde Einstiegsstellung, häufig auch als eine Easy Entry-Stellung bezeichnet. In der Einstiegsstellung sind bevorzugt Teile des Fahrzeugsitzes, insbesondere die Lehne und das Sitzteil, nach vorne geschwenkt, um den Zutritt zu einer hinteren Sitzreihe zu erleichtern. Dabei kann der Fahrzeugsitz auch einen wenigstens zwei Sitzschienen aufweisenden Längseinsteller aufweisen, der zur Einnahme der Einstiegsstellung entriegelbar ist, so dass der Fahrzeugsitz zusätzlich nach vorne schiebbar ist.

Der Fahrzeugsitz kann ein wenigstens einen Sitzplatz bereitstellender Teil innerhalb einer mehrteiligen Sitzbank sein. Der Fahrzeugsitz kann eine ungeteilte Sitzbank sein.

Das Sitzteil kann wenigstens mittelbar mit einer Fahrzeugstruktur verbindbar sein. Der Fahrzeugsitz kann mit wenigstens einer Sitzschiene eines Längseinstellers verbindbar sein. Der Längseinsteller kann eine Sitzschiene sowie eine relativ zur Sitzschiene verschiebbare Bodenschiene aufweisen, die zur Einstellung einer Sitzlängsposition miteinander verriegelbar sind. Der Längseinsteller kann ein motorisch antreibbarer Längseinsteller sein. Der Längseinsteller kann zur manuellen Überführung des Fahrzeugsitzes in die Einstiegsstellung entriegelbar sein. Eine Entriegelung des Längseinstellers kann an eine Betätigung der Kopplungsvorrichtung gekoppelt sein, so dass der Längseinsteller entriegelt, wenn die Kopplungsvorrichtung von der Antriebsvorrichtung entkoppelt ist.

Die Antriebsvorrichtung kann einen elektrischen Motor aufweisen. Die Antriebsvorrichtung kann ein Getriebe aufweisen.

Die Kopplungsvorrichtung kann ein von der Antriebsvorrichtung antreibbares Kopplungsglied, ein mit einem Bauteil der Kinematik, insbesondere einer Schwinge der Kinematik, verbundenes Kopplungsmittel, sowie eine Klinke zur Verriegelung des Kopplungsglieds mit dem Kopplungsmittel aufweisen. Die Verriegelung erfolgt in wenigstens einer Richtung. Vorzugsweise verriegelt die Klinke das Kopplungsglieds mit dem Kopplungsmittel in einer Richtung, die der Nichtgebrauchsstellung des Fahrzeugsitzes entspricht.

Das Kopplungsmittel kann als eine Klinkenträgervorrichtung ausgeführt sein, an der die Klinke schwenkbar gelagert ist. Die Entriegelungsschwinge ist vorzugsweise schwenkbar an dem Kopplungsmittel gelagert.

Das Kopplungsglied kann ein Gegenelement aufweisen. Das Gegenelement kann ein Bolzen sein. Das Gegenelement kann ein Bügel sein. Das Gegenelement kann ein gebogener Draht sein. Das Kopplungsmittel kann eine Aufnahme zur Aufnahme des Gegenelements aufweisen. Die Entriegelungsschwinge kreuzt vorzugsweise die Aufnahme. Mittels einer Bewegung des Gegenelements innerhalb der Aufnahme ist die Entriegelungsschwinge schwenkbar. Die Entriegelungsschwinge kann mittels eines Bowdenzugs mit der Verriegelungsvorrichtung wirkverbunden sein. Eine Schwenkbewegung der Entriegelungsschwinge kann mittels eines Bowdenzugs zur Öffnung der Verriegelungsvorrichtung an die Verriegelungsvorrichtung weitergeleitet werden.

Die Aufnahme kann schlitzförmig sein. Ein offenes Ende des Schlitzes kann durch die Klinke derart verschließbar sein, dass das Gegenelement nicht aus der Aufnahme austreten kann. Die Aufnahme kann einen Endbereich aufweisen. Der Endbereich kann an einem von einem offenen Ende der Aufnahme abgewandten Ende der Aufnahme angeordnet sein. Zur Überführung des Fahrzeugsitzes aus der Gebrauchsstellung in die Einstiegsstellung kann die Antriebsvorrichtung nach erfolgter Entriegelung der Verriegelungsvorrichtung das Gegenelement gegen den Endbereich schwenken, so dass im weiteren Verlauf das Gegenelement das Kopplungsmittel und somit die Kinematik antreibt.

Die Klinke ist vorzugsweise eine sogenannte Spannklinke. Eine Spannklinke ist außerhalb der Selbsthemmung mit einem Gegenelement verriegelbar. Die Spannklinke weist vorzugsweise eine Spannkurve zum Zusammenwirken mit einem Gegenelement, insbesondere einem Bolzen oder einem Bügel, auf, wobei eine Steigung der Spannkurve so gewählt ist, dass keine Selbsthemmung vorhanden ist, aber bei normaler Belastung auf den Fahrzeugsitz das auf die Spannklinke ausgeübte öffnende Drehmoment kleiner ist als ein diesem Drehmoment entgegengesetztes Drehmoment, das eine vorgespannte Feder erzeugt, die die Spannklinge in eine Schließrichtung beaufschlagt.

Zumindest in der Gebrauchsstellung des Fahrzeugsitzes kann das Gegenelement innerhalb der Aufnahme zwischen der Entriegelungsschwinge und der Klinke angeordnet sein. Eine Bewegung des Gegenelements innerhalb der Aufnahme in Richtung des Endbereichs der Aufnahme bewirkt vorzugsweise zunächst einen Kontakt mit der Entriegelungsschwinge und ein Schwenken der Entriegelungsschwinge, bevor das Gegenelement den Endbereich kontaktiert.

Eine Bewegung des Gegenelements innerhalb der Aufnahme in Richtung der Klinke bewirkt vorzugsweise einen Kontakt mit der Klinke. Die Klinke verhindert während eines Normalbetriebs des Fahrzeugssitzes (während einer Überführung zwischen der Gebrauchsstellung und der Nichtgebrauchsstellung mittels der Antriebsvorrichtung) ein Austreten des Gegenelements aus der Aufnahme. Die Klinke sichert das Gegenelement in der Aufnahme gegen ein Verlassen der Aufnahme bis zu einem Erreichen einer auf die Klinke wirkenden Grenzkraft. Das Gegenelement kann ausschließlich mittels der Klinke gegen ein Verlassen der Aufnahme sicherbar sein. Der Fahrzeugsitz kann manuell aus der Gebrauchsstellung in die Nichtgebrauchsstellung schwenkbar sein, indem das Gegenelement aus der Aufnahme austritt.

Ein Kraftspeicher, insbesondere eine Feder, kann die Klinke in Richtung einer das Gegenelement in der Aufnahme (außerhalb der Selbsthemmung) sichernden Stellung vorspannen. Durch ein Aufbringen einer Betätigungskraft auf den Fahrzeugsitz, insbesondere auf die Lehne, kann die Klinke über das Gegenelement mit einem öffnenden Drehmoment beaufschlagbar ist, wobei die Klinke von dem Gegenelement in eine entsicherte Stellung schwenkbar ist, sobald das öffnende Drehmoment größer ist als ein durch den Kraftspeicher auf die Klinke ausgeübtes schließendes Drehmoment.

### Figuren und Ausführungsformen der Erfindung

Im Folgenden ist die Erfindung anhand dreier in den Figuren dargestellter vorteilhafter Ausführungsbeispiele näher erläutert. Die Erfindung ist jedoch nicht auf diese Ausführungsbeispiele beschränkt. Es zeigen:
- Fig. 1:: eine Seitenansicht eines erfindungsgemäßen Fahrzeugsitzes gemäß eines ersten Ausführungsbeispiels in einer Gebrauchsstellung,
- Fig. 2:: eine Seitenansicht des Fahrzeugsitzes aus Fig. 1 in einer Einstiegsstellung,
- Fig. 3:: stark schematisiert und ausschnittweise eine perspektivische Ansicht des Fahrzeugsitzes aus Fig. 1, insbesondere auf eine Bowdenzugvorrichtung zur synchronisierten Entriegelung von zwei Schlössern mittels eines Bedienhebels zur Gewährleistung eines Notausstiegs,
- Fig. 4:: ausschnittweise eine perspektivische Ansicht auf den Fahrzeugsitz aus Fig. 1 in der Gebrauchsstellung,
- Fig. 5:: ausschnittsweise eine Seitenansicht auf den Fahrzeugsitz aus Fig. 1 in der Gebrauchsstellung,
- Fig. 6:: ausschnittsweise eine Seitenansicht auf den Fahrzeugsitz aus Fig. 1 in der Gebrauchsstellung,
- Fig. 7:: ausschnittsweise eine Seitenansicht auf eine Antriebsvorrichtung und eine Kopplungsvorrichtung des Fahrzeugsitzes aus Fig. 1 in der Gebrauchsstellung,
- Fig. 8:: ausschnittsweise den Fahrzeugsitz aus Fig. 1 in der Gebrauchsstellung, wobei eine Entriegelungsschwinge in einer Ausgangs-Winkelstellung dargestellt ist,
- Fig. 9:: ausschnittsweise den Fahrzeugsitz aus Fig. 1 zu Beginn einer Überführung in die Einstiegsstellung, wobei sich die Entriegelungsschwinge in einer ausgesteuerten Winkelstellung befindet,
- Fig. 10:: ausschnittsweise den Fahrzeugsitz aus Fig. 1 in der Einstiegsstellung,
- Fig. 11:: eine Fig. 8 entsprechende Darstellung, wobei sich eine Klinke in einer eine Klinkenträgervorrichtung mit einem Kopplungsglied verriegelnden Stellung befindet,
- Fig. 12:: ausschnittsweise den Fahrzeugsitz aus Fig. 1 während einer manuellen Überführung in die Einstiegsstellung bei geöffneter Klinke,
- Fig. 13:: ausschnittweise eine Seitenansicht auf einen erfindungsgemäßen Fahrzeugsitz gemäß eines zweiten Ausführungsbeispiels,
- Fig. 14:: ausschnittsweise eine Seitenansicht auf den Fahrzeugsitz aus Fig. 13 in einer Gebrauchsstellung, wobei eine Entriegelungsschwinge in einer Ausgangs-Winkelstellung dargestellt ist,
- Fig. 15:: ausschnittsweise eine Seitenansicht auf den Fahrzeugsitz aus Fig. 13 zu Beginn einer Überführung in die Einstiegsstellung, wobei sich die Entriegelungsschwinge in einer ausgesteuerten Winkelstellung befindet
- Fig. 16:: ausschnittweise eine perspektivische Ansicht auf einen Fahrzeugsitz gemäß eines dritten Ausführungsbeispiels in der Gebrauchsstellung,
- Fig. 17: ausschnittsweise eine Seitenansicht auf den Fahrzeugsitz aus Fig. 16 in der Gebrauchsstellung,
- Fig. 18:: ausschnittsweise eine Seitenansicht auf den Fahrzeugsitz aus Fig. 16 in der Gebrauchsstellung,
- Fig. 19:: ausschnittsweise eine Seitenansicht auf eine Antriebsvorrichtung und eine Kopplungsvorrichtung des Fahrzeugsitzes aus Fig. 16 in der Gebrauchsstellung,
- Fig. 20:: ausschnittsweise den Fahrzeugsitz aus Fig. 16 in der Gebrauchsstellung, wobei eine Entriegelungsschwinge in einer Ausgangs-Winkelstellung dargestellt ist,
- Fig. 21:: ausschnittsweise den Fahrzeugsitz aus Fig. 16 zu Beginn einer Überführung in die Einstiegsstellung, wobei sich die Entriegelungsschwinge in einer ausgesteuerten Winkelstellung befindet,
- Fig. 22:: ausschnittsweise den Fahrzeugsitz aus Fig. 16 in der Einstiegsstellung,
- Fig. 23:: eine Fig. 20 entsprechende Darstellung, wobei sich eine Klinke in einer eine Klinkenträgervorrichtung mit einem Kopplungsglied verriegelnden Stellung befindet, und
- Fig. 24:: ausschnittsweise den Fahrzeugsitz aus Fig. 16 während einer manuellen Überführung in die Einstiegsstellung bei geöffneter Klinke.

Nachfolgend wird die Erfindung anhand dreier Ausführungsbeispiele erfindungsgemäßer Fahrzeugsitze 100; 200; 300 beschrieben, wobei die mit der Ziffer 1 beginnenden dreistelligen Bezugszeichen dem ersten Ausführungsbeispiel, die mit der Ziffer 2 beginnenden dreistelligen Bezugszeichen dem zweiten Ausführungsbeispiel und die mit der Ziffer 3 beginnenden dreistelligen Bezugszeichen dem dritten Ausführungsbeispiel zugeordnet sind.

Die in den Figuren schematisch dargestellten Fahrzeugsitze 100; 200; 300 werden nachfolgend unter Verwendung von drei senkrecht zueinander verlaufenden Raumrichtungen beschrieben. Eine Längsrichtung x verläuft bei einem im Fahrzeug eingebauten Fahrzeugsitz 100; 200; 300 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 100; 200; 300 verläuft die Vertikalrichtung z parallel zu der Fahrzeughochachse.

Die verwendeten Positions- und Richtungsangaben, wie beispielsweise vorne, hinten, oben und unten beziehen sich auf eine Blickrichtung eines im Fahrzeugsitz 100; 200; 300 sitzenden Insassen in normaler Sitzposition, wobei der Fahrzeugsitz 100; 200; 300 im Fahrzeug eingebaut, in einer zur Personenbeförderung geeigneten Gebrauchsstellung mit aufrechtstehender Lehne 104; 304 und wie üblich in Fahrtrichtung ausgerichtet ist.

Die Fahrzeugsitze 100; 200; 300, die beispielsweise als Außensitz einer mittleren oder hinteren Sitzreihe eines Kraftfahrzeuges, beispielsweise eines Vans, vorgesehen sind, weisen jeweils ein Sitzteil 102; 202; 302 und eine Lehne 104; 304 auf. Die Lehne 104; 304 ist jeweils mittels wenigstens eines Beschlags 106, vorliegend zweier Beschläge 106, um eine Lehnenschwenkachse L in ihrer Neigung einstellbar, so dass mehrere Gebrauchsstellungen definiert sind. Unter dem Begriff Sitzteil 102; 202; 302 soll die gesamte Baugruppe, aufweisend eine Sitzteilstruktur 102a; 202a; 302a und ein bezogenes Polster, verstanden werden. Soweit Bauteile am Sitzteil 102; 202; 302 angelenkt sind, ist hierunter eine Anlenkung an der Sitzteilstruktur 102a; 202a; 302a des Sitzteils 102; 202; 302 zu verstehen. Entsprechendes gilt für die Lehne 104; 304.

Im Folgenden wird der Einfachheit halber jeweils immer nur eine Fahrzeugsitzseite der im Wesentlichen symmetrischen Fahrzeugsitze 100; 200; 300 beschrieben, das heißt die nachfolgend genannten Bauteile sind, wenn nicht abweichend beschrieben, jeweils doppelt (gegebenenfalls spiegelsymmetrisch) vorhanden.

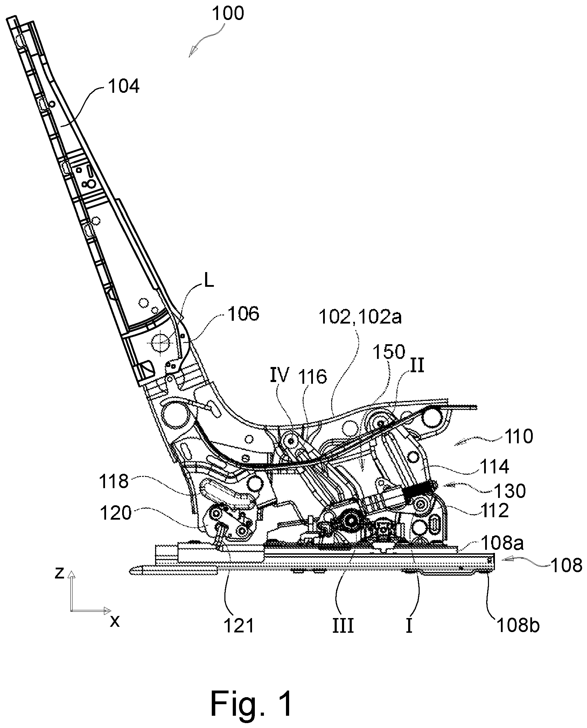

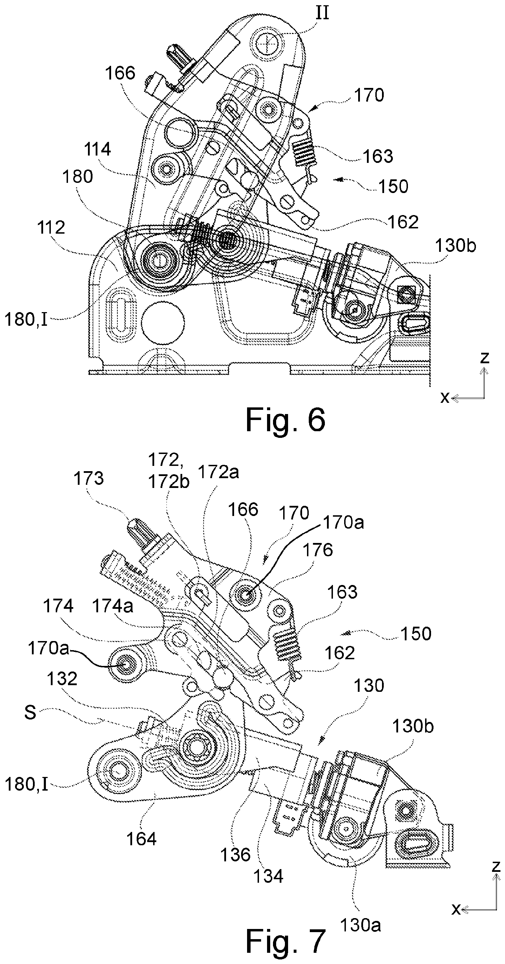

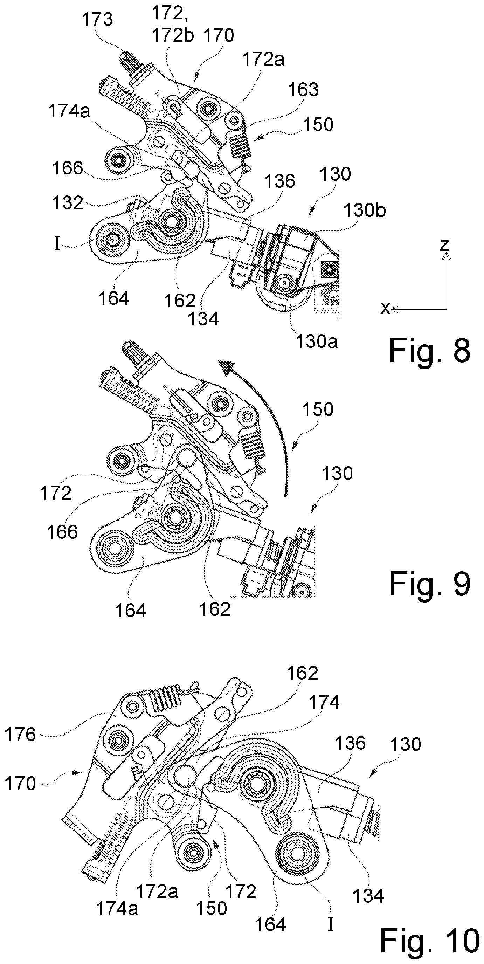

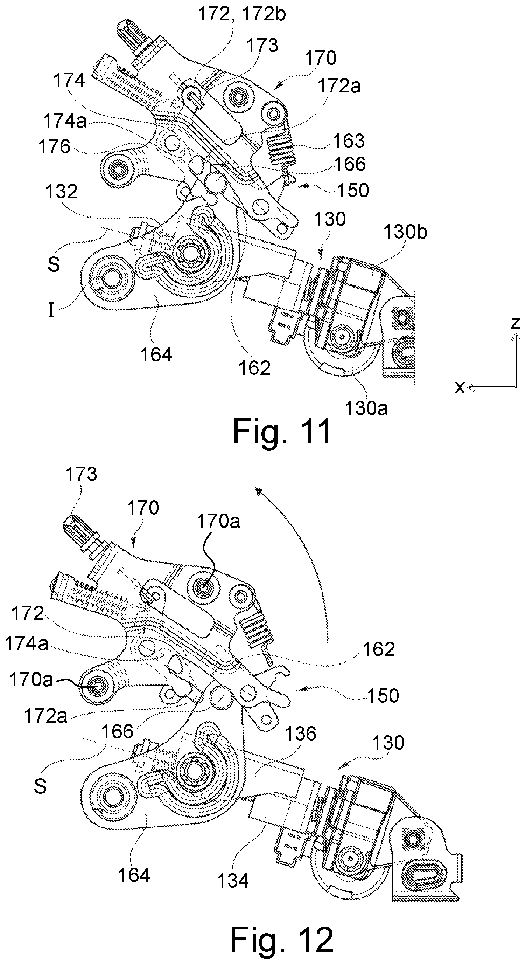

Der Fahrzeugsitz 100 des ersten Ausführungsbeispiels ist nachfolgend anhand der Figuren 1 bis 12 beschrieben.

In Fig. 1 ist der Fahrzeugsitz 100 in einer speziellen Gebrauchsstellung, nämlich einer Designstellung, dargestellt, in welcher die Lehne 104 um beispielsweise 23° gegenüber der Vertikalen nach hinten geneigt ist.

Eine Basis des Fahrzeugsitzes 100 ist mit der Struktur des Kraftfahrzeuges verbindbar. Die Basis ist vorliegend als ein Längseinsteller 108 ausgebildet, welcher eine Längseinstellung des Fahrzeugsitzes 100 ermöglicht. Die Basis weist vorliegend eine direkt mit der Fahrzeugstruktur verbindbare Bodenschiene 108b und eine mit dem Sitzteil 102 verbundene und relativ zu der Bodenschiene 108b in Längsrichtung x verschiebbare Sitzschiene 108a auf. Die beiden profilierten Schienen 108a, 108b hintergreifen einander wechselseitig mit ihren nach innen bzw. nach außen gebogenen Längsrändern. Bevorzugt ist der Längseinsteller 108 in an sich bekannter Weise mittels eines Spindelantriebs in eine beliebige Längseinstellposition innerhalb eines vorgegebenen Einstellbereichs verfahrbar. Alternativ kann ein Längseinsteller vorgesehen sein, dessen Schienen 108a, 108b mittels einer an sich bekannten Schienenverriegelung miteinander verriegelbar sind, wobei die Schienenverriegelung von dem Insassen des Fahrzeugsitzes 1 mittels eines an sich bekannten Entriegelungsbügels manuell entriegelbar ist, und die Längseinstellposition bei entriegelter Schienenverriegelung manuell von dem Insassen veränderbar ist.

An der Basis ist ein vorderer Fuß 112 angebracht. Vorliegend ist der vordere Fuß 112 fest mit der Sitzschiene 108a verbunden. Der vordere Fuß 112 kann alternativ auch lösbar mit der Sitzschiene 108a verriegelt sein.

Im Bereich eines vorderen Endes des vorderen Fußes 112 ist mittels einer Schwinge 114 das Sitzteil 102 angelenkt. Die Schwinge 114 weist zwei Enden auf. Im Bereich dieser beiden Enden ist jeweils ein Drehgelenk vorgesehen. Ein erstes Drehgelenk I bildet eine Anlenkung der Schwinge 114 an dem vorderen Fuß 112. Ein zweites Drehgelenk II bildet eine Anlenkung der Schwinge 114 an dem vorderen Ende des Sitzteils 102. Die Schwinge 114 der linken Fahrzeugsitzseite kann mit der Schwinge 114 der rechten Fahrzeugsitzseite über eine Querverbindung, insbesondere ein Querrohr, verbunden sein.

Das Sitzteil 102 ist ferner mittels eines hinter der Schwinge 114 angeordneten Lenkers 116 an dem vorderen Fuß 112 angelenkt. Der Lenker 116 weist zwei Enden auf, wobei im Bereich dieser beiden Enden jeweils ein Drehgelenk vorgesehen ist. Ein drittes Drehgelenk III bildet eine Anlenkung des Lenkers 116 am vorderen Fuß 112. Ein viertes Drehgelenk IV bildet eine Anlenkung des Lenkers 116 am Sitzteil 102. Auf beiden Seiten des Fahrzeugsitzes 100 ist genau ein solcher Lenker 116 entsprechend angeordnet.

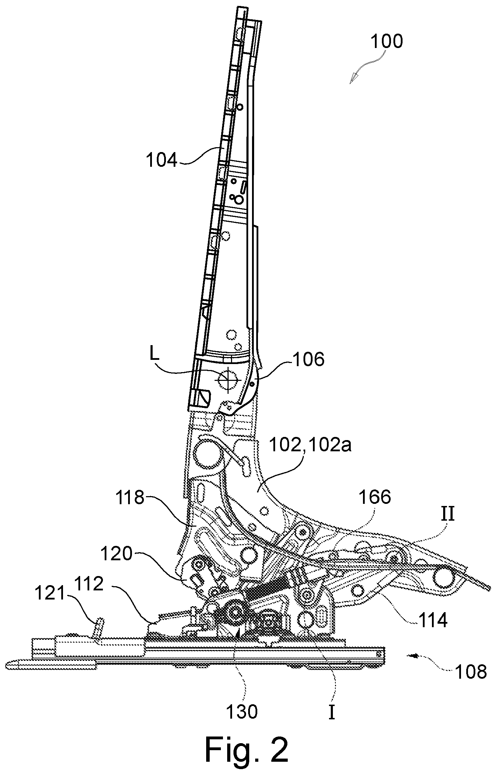

Der vordere Fuß 112, die Schwinge 114, der Lenker 116 und das Sitzteil 102 bilden eine Kinematik 110, insbesondere eine Viergelenkanordnung. Der Fahrzeugsitz 100 ist mittels der Viergelenkanordnung entlang einer vorgegebenen Bewegungsbahn von der Gebrauchsstellung in eine in Fig. 2 dargestellte Einstiegsstellung und zurück bewegbar.

An der Basis, vorliegend der Sitzschiene 108a des Längseinstellers 108, ist ferner in Längsrichtung x hinter dem vorderen Fuß 112 ein vom vorderen Fuß 112 gesondert ausgebildeter hinterer Fuß 118 angeordnet. Der hintere Fuß 118 der linken Fahrzeugsitzseite ist mit dem hinteren Fuß 118 der rechten Fahrzeugsitzseite über eine Querverbindung verbunden. Der hintere Fuß 118 ist mittels eines am hinteren Fuß 118 befestigten Schlosses 120 lösbar mit der Basis verriegelbar, genauer gesagt mit einem basisfesten Schließelement 121 verriegelbar. Vorliegend ist das Schließelement an der Sitzschiene 108a befestigt. Dadurch ist der hintere Fuß 118 indirekt mit der Fahrzeugstruktur verbindbar. Das Schließelement 121 ist beispielsweise ein Bolzen oder ein Drahtbügel.

Das Schließelement 121 ist in einem mit dem Schloss 120 verriegelten Zustand in einer schlitzartigen Aufnahmeöffnung des hinteren Fußes 118 oder alternativ eines Schlossgehäuses des Schlosses 120 zentriert und wird durch eine Drehfalle des Schlosses 120 am Verlassen der Aufnahmeöffnung gehindert. In der Gebrauchsstellung des Fahrzeugsitzes 100 fixieren die Aufnahmeöffnung und die Klinke des Schlosses 120 den hinteren Fuß 118 relativ zur Basis.

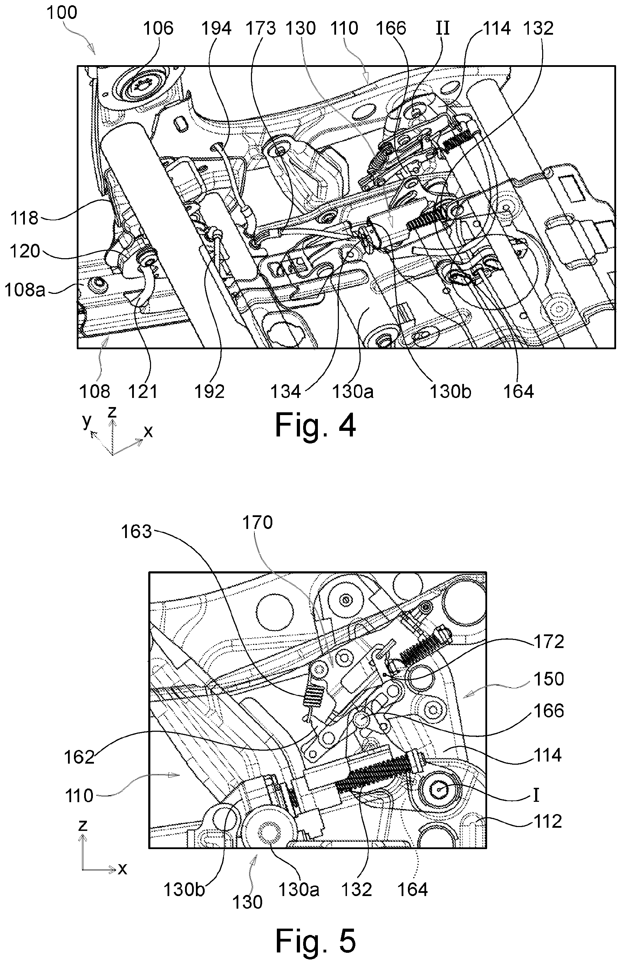

Im Bereich einer der beiden Schwingen 114, beispielsweise im Bereich der linken Schwinge 114, ist eine Antriebsvorrichtung 130 und eine Kopplungsvorrichtung 150 angeordnet. In den Figuren 1 und 2 ist die Kopplungsvorrichtung 150 aus darstellungstechnischen Gründen nicht sichtbar. Aufbau und Funktionsweise der Kopplungsvorrichtung 150 werden nachfolgend insbesondere anhand der Figuren 4 bis 12 beschrieben.

Die Antriebsvorrichtung 130 und die Kopplungsvorrichtung 150 sind nicht zwingend mehrfach vorgesehen und daher nicht notwendigerweise symmetrisch zu einer Mittelebene des Fahrzeugsitzes 100 angeordnet. Je nach Einbausituation des Fahrzeugsitzes 100 in einem Fahrzeug können die Antriebsvorrichtung 130 und die Kopplungsvorrichtung 150 wahlweise auf der linken oder rechten Fahrzeugsitzseite angeordnet sein.

Bei dem Fahrzeugsitz 100 sind keine zusätzlichen mechanischen oder elektromechanischen Aktuatoren notwendig, um die Schlösser 120 der hinteren Füße 118 zu entriegeln, bevor mittels der Kinematik 110 der Fahrzeugsitz 100 von einer Gebrauchsstellung in eine Einstiegsstellung schwenkbar ist. Ein Entriegeln der Schlösser 120 erfolgt durch ein Zusammenwirken der Antriebsvorrichtung 130 und der Kopplungsvorrichtung 150.

Die Antriebsvorrichtung 130 weist einen Motor 130a auf. Die Antriebsvorrichtung 130 weist zudem ein mit dem Motor 130a verbundenes Getriebe 130b und eine Spindel 132 auf. Abtriebsseitig des Getriebes 130b ist die mittels des Motors 130a um eine Spindelachse S rotierend antreibbare Spindel 132 angeordnet. Der Motor 130a ist bevorzugt relativ zu einem vorderen Fuß 112 an der Basis des Fahrzeugsitzes 1 in einem Gegenlager gehalten. Durch eine Rotationsbewegung der Spindel 132 um die Spindelachse S ist eine in einem Verbindungsglied 136 gehaltene Spindelmutter 134 in axialer Richtung der Spindel 132 entlang der Spindel 132 bewegbar. Die Spindelmutter 134 bewegt sich translatorisch entlang der Spindel 132, wenn die Spindel 132 dreht. Das Verbindungsglied 136 ist, insbesondere mittels eines Verbindungsbolzens, schwenkbar mit der Kopplungsvorrichtung 150 verbunden.

Die Kopplungsvorrichtung 150 weist ein Kopplungsglied 164 auf. Das Kopplungsglied 164 ist um einen Lagerbolzen 180 schwenkbar an dem vorderen Fuß gelagert. Der Lagerbolzen 180 fluchtet mit dem ersten Drehgelenk I. Das Kopplungsglied 164 weist einen Bolzen 166 auf. Der Bolzen 166 ist bevorzugt mit dem Kopplungsglied 164 verschweißt.

Zusätzlich zu dem Kopplungsglied 164 umfasst die Kopplungsvorrichtung 150 weiter eine als eine Spannklinke ausgeführte Klinke 162, die um einen Lagerbolzen 162a schwenkbar an einem als Klinkenträgervorrichtung 170 ausgeführten Kopplungsmittel gelagert ist, auf. Die Klinkenträgervorrichtung 170 ist fest mit der Schwinge 114 verbunden, vorzugsweise verschraubt. Dazu weist die Klinkenträgervorrichtung 170 zwei Durchgangslöcher 170a für Schrauben auf.

Die Klinkenträgervorrichtung 170 weist die Klinke 162, eine Entriegelungsschwinge 172 und eine Aufnahme 174 auf. Die Entriegelungsschwinge 172 weist eine Steuerkontur 172a und eine Schnittstelle 172b auf. An die Schnittstelle 172b ist ein Ende eines Bowdenzugs 173 befestigt, vorzugsweise eingehängt. Das andere Ende des Bowdenzugs 173 ist derart an einem der Schlösser 120 der hinteren Füße 118 befestigt, dass ein Schwenken der Entriegelungsschwinge 172 ein Entriegeln der Schlösser 120 bewirkt.

Die Aufnahme 174 dient einer Aufnahme des Bolzens 166 des Kopplungsglieds 164. Die Aufnahme 174 ist ein einseitig offenes Langloch in einer Trägerplatte 176 der Klinkenträgervorrichtung 170. Die Entriegelungsschwinge 172 ist schwenkbar an der Trägerplatte 176 gelagert. Die Steuerkontur 172a der Entriegelungsschwinge 172 kreuzt die Aufnahme 174 derart, dass eine Verschiebung des Bolzens 166 innerhalb der Aufnahme 174 in Richtung eines geschlossenen Endbereichs 174a der Aufnahme 174 ein Schwenken der Entriegelungsschwinge 172 aus einer Ausgangs-Winkelstellung in eine ausgesteuerte Winkelstellung bewirkt.

Während der Verschiebung des Bolzens 166 innerhalb der Aufnahme 174 in Richtung eines geschlossenen Endbereichs 174a gleitet die Steuerkontur 172a der Entriegelungsschwinge 172 derart entlang des Bolzens 166, dass die Entriegelungsschwinge 172 geschwenkt wird und die Schlösser 120 der hinteren Füße 118 geöffnet werden. Durch Bewegen des Gegenelements 166 innerhalb der Aufnahme 174 in Richtung des Endbereichs 174a der Aufnahme 174 schwenkt das Gegenelement 166 die Steuerkontur 172a der Entriegelungsschwinge 172 nach unten.

Ein Austreten des Bolzens 166 aus der Aufnahme 174 ist bis zu einer durch eine Feder 163 definierten Grenzkraft auf die Klinke 162 mittels der Klinke 162 verriegelbar. Die Klinke 162 ist wie in dem zuvor beschriebenen Ausführungsbeispiel eine Spannklinke.

In der Gebrauchsstellung des Fahrzeugsitzes 100 befindet sich der Bolzen 166 innerhalb der Aufnahme 174 in einem Abstand zum Endbereich 174a der Aufnahme 174. Durch Aktivierung der Antriebsvorrichtung 130 schwenkt das Kopplungsglied 164, wodurch sich der Bolzen 166 zunächst bis zu dem Endbereich 174a der Aufnahme 174 bewegt, ohne die Klinkenträgervorrichtung 170 zu schwenken. Die Kinematik 110 bleibt somit zunächst unbetätigt, jedoch bewirkt ein Schwenken der Entriegelungsschwinge 172 ein Entriegeln des Schlosses 120 und löst somit den hinteren Fuß 118 von der Sitzschiene 108a. Im weiteren Verlauf nimmt der Bolzen 166 aufgrund seiner Anlage an den Endbereich 174a die Klinkenträgervorrichtung 170 mit, so dass die Schwinge 114 der Kinematik 110 mitschwenkt und dadurch der Fahrzeugsitz in die Einstiegsstellung überführt wird.

Zum Überführen des Fahrzeugsitzes 100 aus der Einstiegsstellung zurück in die Gebrauchsstellung schwenkt die Antriebsvorrichtung 130 nach einem Durchlaufen eines Leerweges das Kopplungsglied 164 in die entsprechende Richtung. Nach dem Durchlaufen eines Leerweges innerhalb der Aufnahme 174 erreicht der Bolzen 166 die Klinke 162. Der Bolzen 166 wirkt im weiteren Verlauf derart auf die Klinke 162, dass die Klinkenträgervorrichtung 170 mitgenommen wird und dadurch die Schwinge 114 der Kinematik 110 mitschwenkt, wodurch der Fahrzeugsitz 100 in die Gebrauchsstellung überführt wird. Übersteigt dabei die Kraft des Bolzens 166 auf die Klinke 162 eine Grenzkraft, öffnet die Klinke 162 aufgrund ihrer Auslegung als Spannklinke.

Die Klinke 162 ist mittels der Feder 163 in Richtung einer mit dem Bolzen 166 verriegelnden Stellung vorgespannt. Die Klinke 162 ist außerhalb der Selbsthemmung ausgelegt. Unter Belastung übt der Bolzen 166 ein öffnendes Drehmoment auf die Klinke162 aus. Diesem öffnenden Drehmoment wirkt die Kraft der Feder 163 solange verriegelnd entgegen, bis das öffnende Drehmoment größer ist als ein durch die Kraft der Feder 163 erzeugtes Gegenmoment. Das öffnende Drehmoment kann insbesondere durch eine im Bereich einer Lehnenoberkante manuell aufgebrachte Kraft auf die Lehne 102 erfolgen. Übersteigt das durch den Bolzen 166 auf die Klinke 162 ausgeübte Drehmoment das Gegenmoment, öffnet die Klinke und gibt den Bolzen 166 frei. In dem geöffneten Zustand der Klinke 162 ist das Kopplungsglied 164 relativ zu der Schwinge 114 schwenkbar, so dass die Schwinge 114 unabhängig von dem Kopplungsglied 164 schwenkbar ist. Eine manuelle Überführung des Fahrzeugsitzes 100 in die Einstiegsstellung, insbesondere für einen Notausstieg aus einer Sitzreihe hinter dem Fahrzeugsitz 100, kann somit erfolgen.

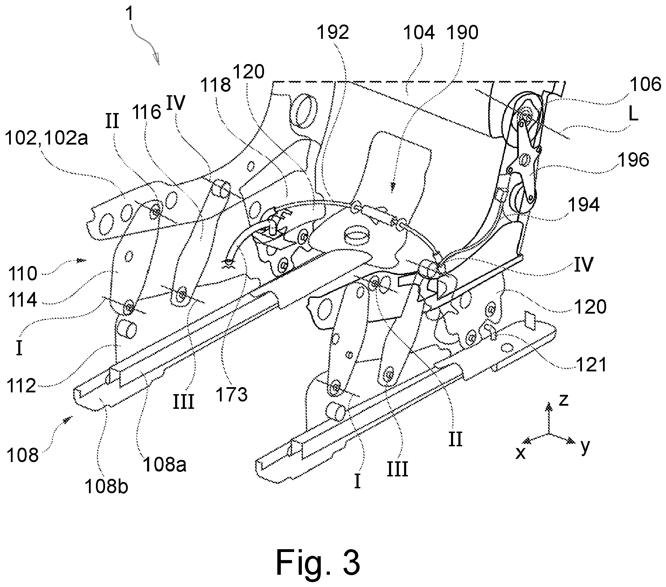

Fig. 3 zeigt eine Bowdenzugvorrichtung 190 zur synchronisierten Entriegelung der beiden Schlösser 120 mittels eines Bedienhebels 196. Die Entriegelung der Schlösser 120 muss bei einer manuellen Überführung des Fahrzeugsitzes 100 in die Einstiegsstellung erfolgen, bevor durch ein Aufbringen einer Kraft auf die Lehne 102 die Klinke 162 öffnet. Die Bowdenzugvorrichtung 190 umfasst einen ersten Bowdenzug 192, einen zweiten Bowdenzug 194 und den Bedienhebel 196. Mittels des ersten Bowdenzugs 192 sind die beiden Schlösser 120 miteinander synchron entriegelbar. Der zweite Bowdenzug 194 verbindet den Bedienhebel 196 mit einem der beiden Schlösser 120. Durch Betätigung des Bedienhebels 196 sind über die Bowdenzüge 192, 194 die beiden Schlösser 120 synchron entriegelbar. Die Bowdenzugvorrichtung 190 dient der Bereitstellung eines Notausstiegs, indem die Schlösser 120 manuell entriegelbar sind. Der zuvor beschriebene elektromechanische Antriebsvorrichtung 130 muss daher für einen Notausstieg nicht bestromt werden.

In einer in den Figuren nicht dargestellten Abwandlung des Ausführungsbeispiels sind zur manuellen Entriegelung der beiden Schlösser 120 anstelle des Bedienhebels 196 zwei Zugschlaufen, insbesondere aus einem Textilband, vorgesehen. Eine erste Zugschlaufe ist nach hinten geführt und dient insbesondere einer Entriegelung der beiden Schlösser 120 durch eine Person, die auf einer hinter dem Fahrzeugsitz 100 angeordneten weiteren Sitzreihe sitzt. Eine zweite Zugschlaufe ist nach vorne geführt und dient insbesondere einer Entriegelung der beiden Schlösser 120 von vorne durch eine neben oder vor dem Fahrzeugsitz 100 befindliche Person.

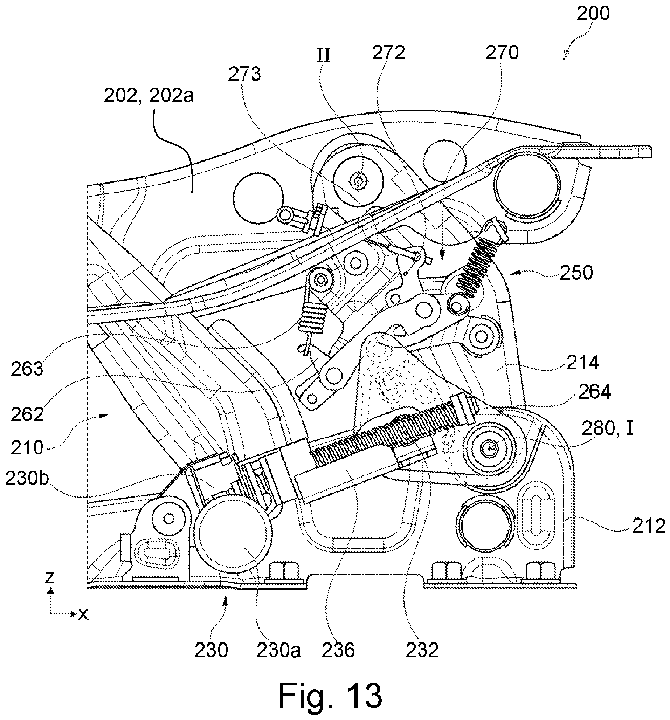

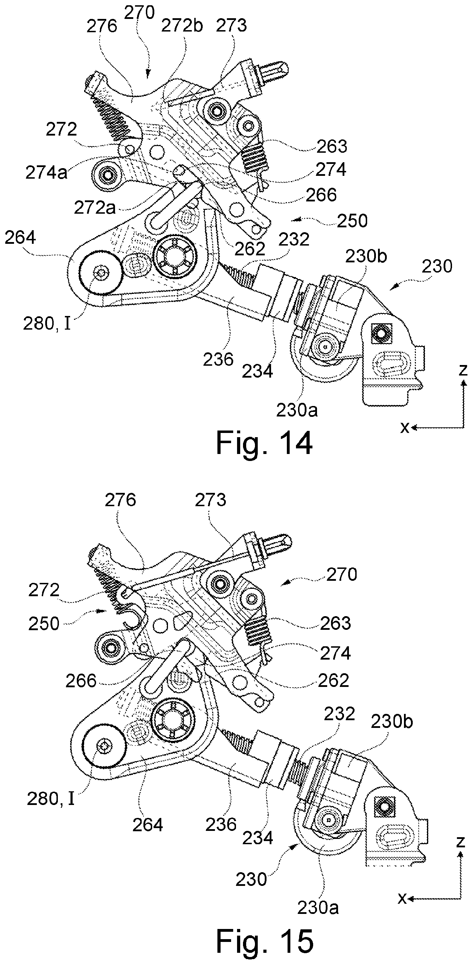

In den Figuren 13 bis 15 ist ein erfindungsgemäßer Fahrzeugsitz 200 gemäß eines zweiten Ausführungsbeispiels beschrieben, welcher dem zuvor beschriebenen Fahrzeugsitz 100 entspricht, soweit nachfolgend nicht abweichend beschrieben. Gleiche oder gleichwirkende Bauteile tragen um den Wert 100 höhere Bezugszeichen. So trägt der Fahrzeugsitz des zweiten Ausführungsbeispiels beispielsweise das gegenüber dem Fahrzeugsitz 100 des ersten Ausführungsbeispiels um den Wert 100 höhere Bezugszeichen 200 (Fahrzeugsitz 200). Soweit Bauteile des zweiten Ausführungsbeispiels nachfolgend nicht beschrieben, aber in den Figuren dargestellt sind, gilt die Beschreibung des entsprechenden Bauteils des ersten Ausführungsbeispiels.

Der Fahrzeugsitz 200 unterscheidet sich von dem zuvor beschriebenen Fahrzeugsitz 100 insbesondere durch eine im Vergleich zum ersten Ausführungsbeispiel entgegengesetzte Entriegelungs-Drehrichtung der Entriegelungsschwinge 272. Dadurch kann der Bowdenzug 273 mit einer im Vergleich zum ersten Ausführungsbeispiel in entgegengesetzter Richtung wirkenden Zugkraft beaufschlagt werden. Die geänderte Entriegelungs-Drehrichtung ist durch eine entsprechend geänderte Steuerkontur 272a erreicht. Durch Bewegen des Gegenelements 266 innerhalb der Aufnahme 274 in Richtung des Endbereichs 274a der Aufnahme 274 schwenkt das Gegenelement 266 die Steuerkontur 272a der Entriegelungsschwinge 272 nach oben.

Das Gegenelement 266 zum Zusammenwirken mit der Entriegelungsschwinge 272 und der Klinke 262 ist im zweiten Ausführungsbeispiel als ein Bügel ausgeführt.

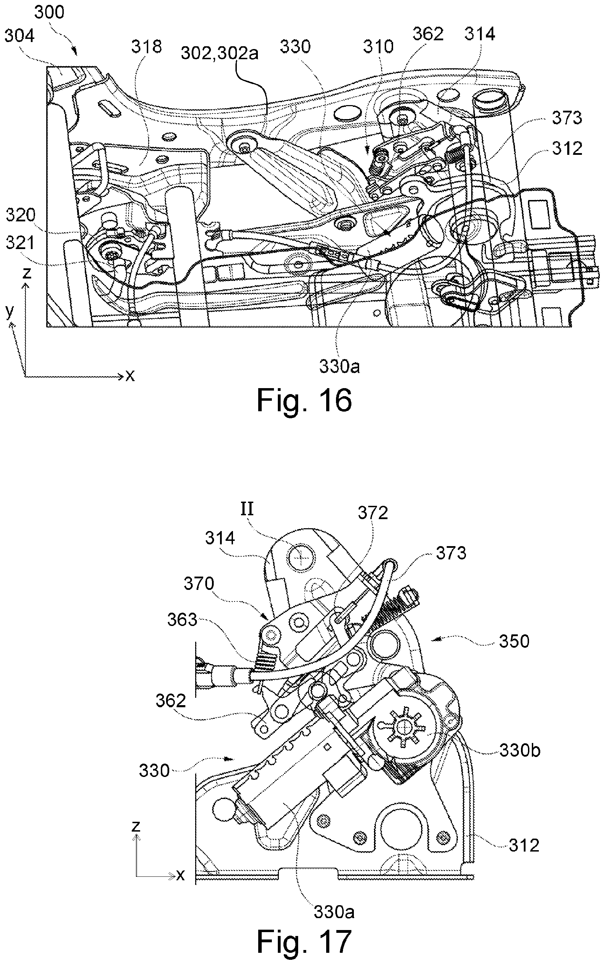

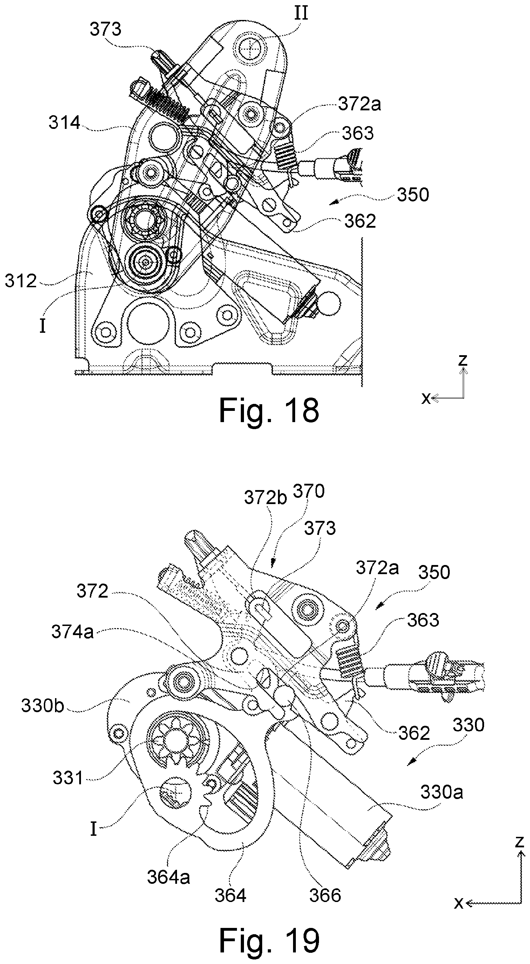

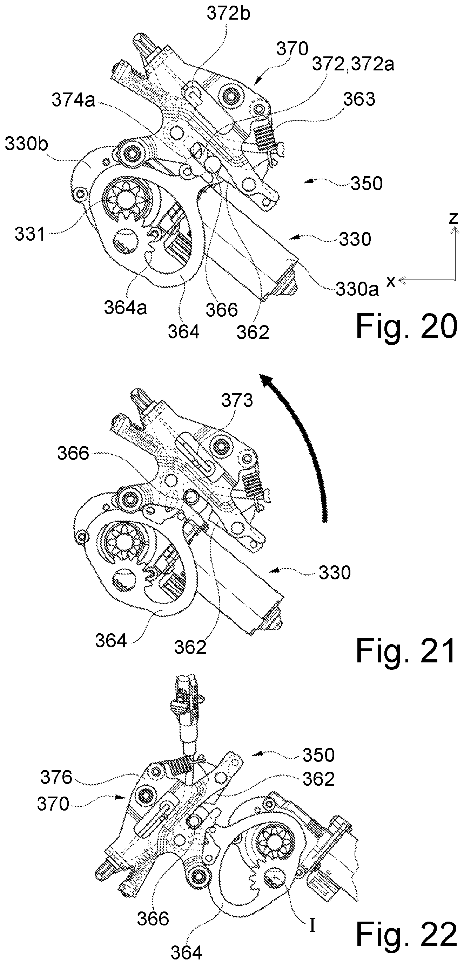

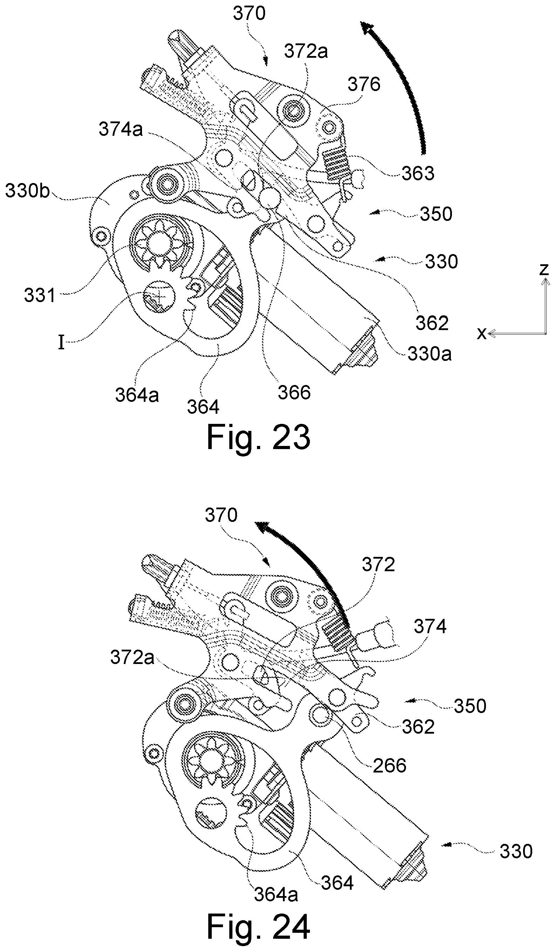

In den Figuren 16 bis 24 ist ein erfindungsgemäßer Fahrzeugsitz 300 gemäß eines dritten Ausführungsbeispiels beschrieben, welcher dem zuvor beschriebenen Fahrzeugsitz 100 entspricht, soweit nachfolgend nicht abweichend beschrieben. Gleiche oder gleichwirkende Bauteile tragen um den Wert 200 höhere Bezugszeichen. So trägt der Fahrzeugsitz des dritten Ausführungsbeispiels beispielsweise das gegenüber dem Fahrzeugsitz 100 des ersten Ausführungsbeispiels um den Wert 200 höhere Bezugszeichen 300 (Fahrzeugsitz 300). Soweit Bauteile des dritten Ausführungsbeispiels nachfolgend nicht beschrieben, aber in den Figuren dargestellt sind, gilt die Beschreibung des entsprechenden Bauteils des ersten Ausführungsbeispiels.

Der Fahrzeugsitz 300 unterscheidet sich von dem zuvor beschriebenen Fahrzeugsitzen 100 insbesondere durch eine abweichend ausgeführte Antriebsvorrichtung 330 sowie ein abweichend ausgeführtes Kopplungsglied 364.

Die Antriebsvorrichtung 330 weist einen Motor 330a auf. Die Antriebsvorrichtung 330 weist zudem ein mit dem Motor 330a verbundenes Getriebe 330b auf. Abtriebsseitig weist das Getriebe 330b ein Ritzel 331 auf. Eine solche Antriebsvorrichtung 330 ist beispielsweise aus der DE 197 09 852 C2 bekannt.

Das Kopplungsglied 364 weist ein Zahnsegment 364a auf, das in Zahneingriff mit dem Ritzel 331 ist. Durch Drehung des Ritzels 331 schwenkt das Kopplungsglied 364 um die durch das erste Drehgelenk definierte Drehachse.

Ansonsten entspricht der Aufbau und die Funktionsweise des Fahrzeugsitzes 300 dem zuvor beschriebenen Fahrzeugsitz 100 des ersten Ausführungsbeispiels.

### Bezugszeichenliste

100; 200; 300 Fahrzeugsitz
102; 202; 302 Sitzteil
102a; 202a; 302a Sitzteilstruktur
104; 304 Lehne
106 Beschlag
108 Längseinsteller
108a Sitzschiene
108b Bodenschiene
110; 210; 310 Kinematik
112; 212; 312 vorderer Fuß
114; 214; 314 Schwinge
116 Lenker
118; 318 hinterer Fuß
120; 320 Schloss
121; 321 Schließelement
130; 230; 330 Antriebsvorrichtung
   331 Ritzel
130a; 230a; 330a Motor
130b; 230b; 330b Getriebe
132; 232; 332 Spindel
134;234; 334 Spindelmutter
136; 236; 336 Verbindungsglied
150; 250; 350 Kopplungsvorrichtung
162; 262; 362 Klinke
163; 263; 363 Feder
164; 264; 364 Kopplungsglied
   364a Zahnsegment
166; 266; 366 Gegenelement, Bolzen, Bügel
170; 270; 370 Kopplungsmittel, Klinkenträgervorrichtung
172; 272; 372 Entriegelungsschwinge
172a; 272a; 372a Steuerkontur
172b; 272b; 372b Schnittstelle
173; 273; 373 Bowdenzug
174; 274; 374 Aufnahme
174a; 274a; 374a Endbereich
176; 276; 376 Trägerplatte
180; 280; 380 Lagerbolzen
190 Bowdenzugvorrichtung
192 erster Bowdenzug
194 zweiter Bowdenzug
196 Bedienhebel
I erstes Drehgelenk
II zweites Drehgelenk
III drittes Drehgelenk
IV viertes Drehgelenk
L Lehnenschwenkachse
S Spindelachse
x Längsrichtung
y Querrichtung
z Vertikalrichtung

## Patentansprüche

1. Fahrzeugsitz (100; 200; 300), insbesondere Kraftfahrzeugsitz, mit einem Sitzteil (102; 202; 302), einer Lehne (104; 304), einer Kinematik (110; 210; 310) zur Überführung des Fahrzeugsitzes (100; 200; 300) von einer zur Personenbeförderung geeigneten Gebrauchsstellung in eine Nichtgebrauchsstellung und zurück, und einer Verriegelungsvorrichtung, insbesondere einem Schloss (120; 320), zur Verriegelung der Kinematik (110; 210; 310) in der Gebrauchsstellung, wobei der Fahrzeugsitz (100; 200; 300) bei entriegelter Verriegelungsvorrichtung aus der Gebrauchsstellung in die Einstiegsstellung überführbar ist, wobei die Kinematik (110; 210; 310) zur Überführung des Fahrzeugsitzes (100; 200; 300) aus der Gebrauchsstellung in die Nichtgebrauchsstellung mittels einer Kopplungsvorrichtung (150; 250; 350) an eine Antriebsvorrichtung (130; 230; 330) koppelbar ist, **dadurch gekennzeichnet, dass** die Kopplungsvorrichtung (150; 250; 350) eine Entriegelungsschwinge (172; 272; 372) zur wenigstens mittelbaren Entriegelung der Verriegelungsvorrichtung aufweist, wobei in der Gebrauchsstellung des Fahrzeugsitzes (100; 200; 300) eine Aktivierung der Antriebsvorrichtung (130; 230; 330) zunächst eine Schwenkbewegung der Entriegelungsschwinge (172; 272; 372) bewirkt, so dass eine Entriegelung der Verriegelungsvorrichtung erfolgt, und erst nach der Schwenkbewegung der Entriegelungsschwinge (172; 272; 372) die Kinematik (110; 210; 310) von der Antriebsvorrichtung (130; 230; 330) zur Überführung des Fahrzeugsitzes (100; 200; 300) in die Nichtgebrauchsstellung antreibbar ist.

2. Fahrzeugsitz (100; 200; 300) nach Anspruch 1, **dadurch gekennzeichnet, dass** die Kopplungsvorrichtung (150; 250; 350) ein von der Antriebsvorrichtung (130; 230; 330) antreibbares Kopplungsglied (164; 264; 364), ein mit einem Bauteil der Kinematik (110; 210; 310), insbesondere einer Schwinge (114; 214; 314) der Kinematik (110; 210; 310), verbundenes Kopplungsmittel (170; 270; 370), sowie eine Klinke (162; 262; 362) zur Verriegelung des Kopplungsglieds (164; 264; 364) mit dem Kopplungsmittel (170; 270; 370) in wenigstens einer Richtung aufweist.

3. Fahrzeugsitz (100; 200; 300) gemäß Anspruch 2, **dadurch gekennzeichnet, dass** das Kopplungsmittel (170; 270; 370) als eine Klinkenträgervorrichtung ausgeführt ist, an der die Klinke (162; 262; 362) schwenkbar gelagert ist.

4. Fahrzeugsitz (100; 200; 300) nach Anspruch 3, **dadurch gekennzeichnet, dass** die Entriegelungsschwinge (172; 272; 372) schwenkbar an dem Kopplungsmittel (170; 270; 370) gelagert ist.

5. Fahrzeugsitz (100; 200; 300) nach einem der Ansprüche 2 bis 4, **dadurch gekennzeichnet, dass** das Kopplungsmittel (170; 270; 370) eine Aufnahme (174; 274; 374) zur Aufnahme eines Gegenelements, insbesondere eines Bolzens (166; 366) oder eines Bügels (266), des Kopplungsglieds (164; 264; 364) aufweist.

6. Fahrzeugsitz (100; 200; 300) nach Anspruch 5, **dadurch gekennzeichnet, dass** die Entriegelungsschwinge (172; 272; 372) die Aufnahme (174; 274; 374) kreuzt und mittels einer Bewegung des Gegenelements (166; 266; 366) innerhalb der Aufnahme (174; 274; 374) die Entriegelungsschwinge (172; 272; 372) schwenkbar ist.

7. Fahrzeugsitz (100; 200; 300) nach Anspruch 5 oder 6, **dadurch gekennzeichnet, dass** die Aufnahme (174; 274; 374) einen Endbereich (174a; 274a; 374a) aufweist, wobei zur Überführung des Fahrzeugsitzes (100; 200; 300) aus der Gebrauchsstellung in die Einstiegsstellung, die Antriebsvorrichtung (130; 230; 330) nach erfolgter Entriegelung der Verriegelungsvorrichtung das Gegenelement (166; 266; 366) gegen den Endbereich (174a; 274a; 374a) schwenkt und im weiteren Verlauf das Gegenelement (166; 266; 366) das Kopplungsmittel (170; 270; 370) und somit die Kinematik (110; 210; 310) antreibt.

8. Fahrzeugsitz (100; 200; 300) nach einem der Ansprüche 2 bis 7, **dadurch gekennzeichnet, dass** die Klinke (162; 262; 362) als eine Spannklinke ausgeführt ist.

9. Fahrzeugsitz (100; 200; 300) nach einem der Ansprüche 5 bis 8, **dadurch gekennzeichnet, dass** zumindest in der Gebrauchsstellung des Fahrzeugsitzes (100; 200; 300) das Gegenelement (166; 266; 366) innerhalb der Aufnahme (174; 274; 374) zwischen der Entriegelungsschwinge (172; 272; 372) und der Klinke (162; 262; 362) angeordnet ist.

10. Fahrzeugsitz (100; 200; 300) nach einem der Ansprüche 5 bis 9, **dadurch gekennzeichnet, dass** die Klinke (162; 262; 362) das Gegenelement (166; 266; 366) in der Aufnahme (174; 274; 374) gegen ein Verlassen der Aufnahme (174; 274; 374), insbesondere bis zum Erreichen einer auf die Klinke (162; 262; 362) wirkenden Grenzkraft, sichert.

11. Fahrzeugsitz (100; 200; 300) nach einem der Ansprüche 5 bis 10, **dadurch gekennzeichnet, dass** das Gegenelement (166; 266; 366) ausschließlich mittels der Klinke (162; 262; 362) gegen ein Verlassen der Aufnahme (174; 274; 374) sicherbar ist.

12. Fahrzeugsitz (100; 200; 300) nach einem der Ansprüche 5 bis 11, **dadurch gekennzeichnet, dass** ein Kraftspeicher, insbesondere eine Feder (163; 263; 363), die Klinke (162; 262; 362) in Richtung einer das Gegenelement (166; 266; 366) in der Aufnahme (174; 274; 374) außerhalb der Selbsthemmung sichernden Stellungvorspannt.

13. Fahrzeugsitz (100; 200; 300) nach einem der Ansprüche 5 bis 12, **dadurch gekennzeichnet, dass** durch ein Aufbringen einer Betätigungskraft auf den Fahrzeugsitz (100; 200; 300), insbesondere auf die Lehne (104; 304), die Klinke (162; 262; 362) über das Gegenelement (166; 266; 366) mit einem öffnenden Drehmoment beaufschlagbar ist, wobei die Klinke (162; 262; 362) von dem Gegenelement (166; 266; 366) in eine entsicherte Stellung schwenkbar ist, wenn das öffnende Drehmoment größer ist als ein durch den Kraftspeicher auf die Klinke (162; 262; 362) ausgeübtes schließendes Drehmoment.

14. Fahrzeugsitz (100; 200; 300) nach Anspruch 13, **dadurch gekennzeichnet, dass** bei entsicherter Stellung der Klinke (162; 262; 362) der Fahrzeugsitz (100; 200; 300) manuell aus der Gebrauchsstellung in die Nichtgebrauchsstellung schwenkbar ist, wobei das Gegenelement (166; 266; 366) aus der Aufnahme (174; 274; 374) austritt.

## Claims

1. Vehicle seat (100; 200; 300), in particular a motor-vehicle seat, having a seat part (102; 202; 302), having a backrest (104; 304), having a kinematics mechanism (110; 210; 310) for transferring the vehicle seat (100; 200; 300) from a use position, in which the vehicle seat is suitable for transporting people, into a not-in-use position, and back again, and having a locking device, in particular a lock (120; 320), for locking the kinematics mechanism (110; 210; 310) in the use position, wherein, when the locking device has been unlocked, the vehicle seat (100; 200; 300) can be transferred out of the use position into the access position, wherein the kinematics mechanism (110; 210; 310), for transferring the vehicle seat (100; 200; 300) out of the use position into the not-in-use position, can be coupled to a drive device (130; 230; 330) by a coupling device (150; 250; 350), **characterized in that** the coupling device (150; 250; 350) has an unlocking swing arm (172; 272; 372) for at least indirectly unlocking the locking device, wherein, in the use position of the vehicle seat (100; 200; 300), activation of the drive device (130; 230; 330) first of all causes the unlocking swing arm (172; 272; 372) to pivot, so that the locking device is unlocked, and it is only following the pivoting movement of the unlocking swing arm (172; 272; 372) that the kinematics mechanism (110; 210; 310) can be driven by the drive device (130; 230; 330) for the purpose of transferring the vehicle seat (100; 200; 300) into the not-in-use position.

2. Vehicle seat (100; 200; 300) according to Claim 1, **characterized in that** the coupling device (150; 250; 350) has a coupling member (164; 264; 364), which can be driven by the drive device (130; 230; 330), a coupling means (170; 270; 370), which is connected to a component of the kinematics mechanism (110; 210; 310), in particular a swing arm (114; 214; 314) of the kinematics mechanism (110; 210; 310), and also a catch (162; 262; 362) for locking the coupling member (164; 264; 364) to the coupling means (170; 270; 370) in at least one direction.

3. Vehicle seat (100; 200; 300) according to Claim 2, **characterized in that** the coupling means (170; 270; 370) is designed in the form of a catch-support device, on which the catch (162; 262; 362) is mounted in a pivotable manner.

4. Vehicle seat (100; 200; 300) according to Claim 3, **characterized in that** the unlocking swing arm (172; 272; 372) is mounted in a pivotable manner on the coupling means (170; 270; 370).

5. Vehicle seat (100; 200; 300) according to one of Claims 2 to 4, **characterized in that** the coupling means (170; 270; 370) has a mount (174; 274; 374) for receiving a mating element, in particular a bolt (166; 366) or a clip (266), of the coupling member (164; 264; 364).

6. Vehicle seat (100; 200; 300) according to Claim 5, **characterized in that** the unlocking swing arm (172; 272; 372) crosses over the mount (174; 274; 374), and the unlocking swing arm (172; 272; 372) can be pivoted by a movement of the mating element (166; 266; 366) within the mount (174; 274; 374).

7. Vehicle seat (100; 200; 300) according to Claim 5 or 6, **characterized in that** the mount (174; 274; 374) has an end region (174a; 274a; 374a), wherein, for the purpose of transferring the vehicle seat (100; 200; 300) out of the use position into the access position, it is the case that, once the locking device has been unlocked, the drive device (130; 230; 330) pivots the mating element (166; 266; 366) toward the end region (174a; 274a; 374a) and, as the operation progresses, the mating element (166; 266; 366) drives the coupling means (170; 270; 370) and therefore the kinematics mechanism (110; 210; 310).

8. Vehicle seat (100; 200; 300) according to one of Claims 2 to 7, **characterized in that** the catch (162; 262; 362) is designed in the form of a bracing catch.

9. Vehicle seat (100; 200; 300) according to one of Claims 5 to 8, **characterized in that**, at least in the use position of the vehicle seat (100; 200; 300), the mating element (166; 266; 366) is arranged within the mount (174; 274; 374), between the unlocking swing arm (172; 272; 372) and the catch (162; 262; 362).

10. Vehicle seat (100; 200; 300) according to one of Claims 5 to 9, **characterized in that** the catch (162; 262; 362) secures the mating element (166; 266; 366) in the mount (174; 274; 374) so that it does not leave the mount (174; 274; 374), in particular until a limit force acting on the catch (162; 262; 362) has been reached.

11. Vehicle seat (100; 200; 300) according to one of Claims 5 to 10, **characterized in that** it is exclusively the catch (162; 262; 362) which can secure the mating element (166; 266; 366) so that it does not leave the mount (174; 274; 374).

12. Vehicle seat (100; 200; 300) according to one of Claims 5 to 11, **characterized in that** an energy store, in particular a spring (163; 263; 363), prestresses the catch (162; 262; 362) in the direction of a position in which it secures the mating element (166; 266; 366) in the mount (174; 274; 374) outside the self-locking region.

13. Vehicle seat (100; 200; 300) according to one of Claims 5 to 12, **characterized in that**, by virtue of an actuating force being applied to the vehicle seat (100; 200; 300), in particular to the backrest (104; 304), the catch (162; 262; 362) can be subjected to an opening torque via the mating element (166; 266; 366), wherein the catch (162; 262; 362) can be pivoted into a released position by the mating element (166; 266; 366) when the opening torque is greater than a closing torque exerted on the catch (162; 262; 362) by the energy store.

14. Vehicle seat (100; 200; 300) according to Claim 13, **characterized in that**, in the released position of the catch (162; 262; 362), the vehicle seat (100; 200; 300) can be pivoted manually out of the use position into the not-in-use position, wherein the mating element (166; 266; 366) exits from the mount (174; 274; 374).

## Revendications

1. Siège de véhicule (100 ; 200 ; 300), en particulier siège de véhicule automobile, comportant une partie d'assise (102 ; 202 ; 302), un dossier (104 ; 304), un système cinématique (110 ; 210 ; 310) servant au transfert du siège de véhicule (100 ; 200 ; 300) d'une position d'utilisation appropriée au transport de personnes à une position de non utilisation et inversement, et un dispositif de verrouillage, en particulier un verrou (120 ; 320), servant au verrouillage du système cinématique (110 ; 210 ; 310) dans la position d'utilisation, le siège de véhicule (100 ; 200 ; 300) pouvant être transféré de la position d'utilisation à la position d'entrée lorsque le dispositif de verrouillage est déverrouillé, le système cinématique (110 ; 210 ; 310) pouvant être accouplé à un dispositif d'entraînement (130 ; 230 ; 330) au moyen d'un dispositif d'accouplement (150 ; 250 ; 350) pour le transfert du siège de véhicule (100 ; 200 ; 300) de la position d'utilisation à la position de non utilisation, **caractérisé en ce que** le dispositif d'accouplement (150 ; 250 ; 350) présente un bras oscillant de déverrouillage (172 ; 272 ; 372) servant au déverrouillage au moins indirect du dispositif de verrouillage, une activation du dispositif d'entraînement (130 ; 230 ; 330) provoquant tout d'abord un mouvement de pivotement du bras oscillant de déverrouillage (172 ; 272 ; 372) dans la position d'utilisation du siège de véhicule (100 ; 200 ; 300), de sorte qu'un déverrouillage du dispositif de verrouillage ait lieu, et le système cinématique (110 ; 210 ; 310) ne pouvant être entraîné par le dispositif d'entraînement (130 ; 230 ; 330) pour le transfert du siège de véhicule (100 ; 200 ; 300) à la position de non utilisation qu'après le mouvement de pivotement du bras oscillant de déverrouillage (172 ; 272 ; 372).

2. Siège de véhicule (100 ; 200 ; 300) selon la revendication 1, **caractérisé en ce que** le dispositif d'accouplement (150 ; 250 ; 350) présente un organe d'accouplement (164 ; 264 ; 364) pouvant être entraîné par le dispositif d'entraînement (130 ; 230 ; 330), un moyen d'accouplement (170 ; 270 ; 370) relié à un composant du système cinématique (110 ; 210 ; 310), en particulier à un bras oscillant (114 ; 214 ; 314) du système cinématique (110 ; 210 ; 310), ainsi qu'un cliquet (162 ; 262 ; 362) servant au verrouillage de l'organe d'accouplement (164 ; 264 ; 364) avec le moyen d'accouplement (170 ; 270 ; 370) dans au moins une direction.

3. Siège de véhicule (100 ; 200 ; 300) selon la revendication 2, **caractérisé en ce que** le moyen d'accouplement (170 ; 270 ; 370) est réalisé sous la forme d'un dispositif de support de cliquet, sur lequel le cliquet (162 ; 262 ; 362) est monté pivotant.

4. Siège de véhicule (100 ; 200 ; 300) selon la revendication 3, **caractérisé en ce que** le bras oscillant de déverrouillage (172 ; 272 ; 372) est monté pivotant sur le moyen d'accouplement (170 ; 270 ; 370).

5. Siège de véhicule (100 ; 200 ; 300) selon l'une des revendications 2 à 4, **caractérisé en ce que** le moyen d'accouplement (170 ; 270 ; 370) présente un logement (174 ; 274 ; 374) servant au logement d'un élément conjugué, en particulier d'un boulon (166 ; 366) ou d'un étrier (266), de l'organe d'accouplement (164 ; 264 ; 364) .

6. Siège de véhicule (100 ; 200 ; 300) selon la revendication 5, **caractérisé en ce que** le bras oscillant de déverrouillage (172 ; 272 ; 372) croise le logement (174 ; 274 ; 374) et le bras oscillant de déverrouillage (172 ; 272 ; 372) peut être pivoté par le biais d'un mouvement de l'élément conjugué (166 ; 266 ; 366) à l'intérieur du logement (174 ; 274 ; 374).

7. Siège de véhicule (100 ; 200 ; 300) selon la revendication 5 ou 6, **caractérisé en ce que** le logement (174 ; 274 ; 374) présente une région d'extrémité (174a ; 274a ; 374a), le dispositif d'entraînement (130 ; 230 ; 330), une fois que le déverrouillage du dispositif de verrouillage a été effectué, faisant pivoter l'élément conjugué (166 ; 266 ; 366) vers la région d'extrémité (174a ; 274a ; 374a) pour le transfert du siège de véhicule (100 ; 200 ; 300) de la position d'utilisation à la position d'entrée et, par la suite, l'élément conjugué (166 ; 266 ; 366) entraînant le moyen d'accouplement (170 ; 270 ; 370) et donc le système cinématique (110 ; 210 ; 310).

8. Siège de véhicule (100 ; 200 ; 300) selon l'une des revendications 2 à 7, **caractérisé en ce que** le cliquet (162 ; 262 ; 362) est réalisé sous la forme d'un cliquet de serrage.

9. Siège de véhicule (100 ; 200 ; 300) selon l'une des revendications 5 à 8, **caractérisé en ce qu'**au moins dans la position d'utilisation du siège de véhicule (100 ; 200 ; 300), l'élément conjugué (166 ; 266 ; 366) est disposé à l'intérieur du logement (174 ; 274 ; 374) entre le bras oscillant de déverrouillage (172 ; 272 ; 372) et le cliquet (162 ; 262 ; 362).

10. Siège de véhicule (100 ; 200 ; 300) selon l'une des revendications 5 à 9, **caractérisé en ce que** le cliquet (162 ; 262 ; 362) fixe l'élément conjugué (166 ; 266 ; 366) dans le logement (174 ; 274 ; 374) de manière à l'empêcher de sortir du logement (174 ; 274 ; 374), en particulier jusqu'à ce qu'une force limite agissant sur le cliquet (162 ; 262 ; 362) soit atteinte.

11. Siège de véhicule (100 ; 200 ; 300) selon l'une des revendications 5 à 10, **caractérisé en ce que** l'élément conjugué (166 ; 266 ; 366) peut être fixé exclusivement au moyen du cliquet (162 ; 262 ; 362) de manière à l'empêcher de sortir du logement (174 ; 274 ; 374).

12. Siège de véhicule (100 ; 200 ; 300) selon l'une des revendications 5 à 11, **caractérisé en ce qu'**un accumulateur de force, en particulier un ressort (163 ; 263 ; 363), précontraint le cliquet (162 ; 262 ; 362) en direction d'une position fixant l'élément conjugué (166 ; 266 ; 366) dans le logement (174 ; 274 ; 374) à l'extérieur du blocage automatique.

13. Siège de véhicule (100 ; 200 ; 300) selon l'une des revendications 5 à 12, **caractérisé en ce que**, par une application d'une force d'actionnement sur le siège de véhicule (100 ; 200 ; 300), en particulier sur le dossier (104 ; 304), le cliquet (162 ; 262 ; 362) peut être soumis à un couple d'ouverture par le biais de l'élément conjugué (166 ; 266 ; 366), le cliquet (162 ; 262 ; 362) pouvant être pivoté par l'élément conjugué (166 ; 266 ; 366) dans une position déverrouillée, lorsque le couple d'ouverture est supérieur à un couple de fermeture exercé sur le cliquet (162 ; 262 ; 362) par l'accumulateur de force.

14. Siège de véhicule (100 ; 200 ; 300) selon la revendication 13, **caractérisé en ce que**, dans la position déverrouillée du cliquet (162 ; 262 ; 362), le siège de véhicule (100 ; 200 ; 300) peut être pivoté manuellement de la position d'utilisation à la position de non utilisation, l'élément conjugué (166 ; 266 ; 366) sortant du logement (174 ; 274 ; 374).
